# EUROPEAN PATENT APPLICATION

(11) **EP 4 674 589 A1**
(43) Date of publication of application: **07.01.2026**
(21) Application number: 24929413.3
(22) Date of filing: 11.04.2024
(51) Int. Cl.: B29C 45/27, B29C 33/42

(54) **MARKING DEVICE**

(71) Applicant: Uratani Shoji Company Ltd., Osaka-shi, Osaka 5550025 (JP)
(72) Inventor: URATANI, Naoto, Osaka-shi Osaka 5550025 (JP)
(74) Representative: Manuel Illescas y Asociados, S.L.U.
(86) International application number: PCT/JP2024/014703
(87) International publication number: WO 2025/215799

(57) **Abstract**

The invention provides a marking device having a simple structure, capable of reliably restoring the position and precisely rotating an indicator body by one pitch.

A marking device to be fitted into a recess of a molding mold, the marking device is characterized by comprising:
a hollow cylindrical body comprising a first hole at a center of a lower face thereof;
a driving portion comprising a first base provided with a first sawtooth portion in the hollow cylindrical body, a second base provided with a second sawtooth portion fitted into an interior of the first base, and a first connecting rod extending toward a lower portion of the marking device;
a first driving-driven portion comprising a third base provided with a third sawtooth portion and a fourth sawtooth portion; and
a second driving-driven portion comprising a fourth base provided with a fifth sawtooth portion that engages with the fourth sawtooth portion, and a second connecting rod provided with a head portion; wherein an indicator body is provided on an upper side of the head portion.

## Description

### BACKGROUND OF THE INVENTION

### Field of the Invention

The present invention relates to a marking device.

### Description of Related Art

In an injection molding machine, a movable mold base plate (movable mold) is driven in a direction toward and away from a fixed mold base plate (fixed mold) to perform mold clamping (mold close) and mold opening (mold open) of the mold base plates. Molten synthetic resin is supplied into a cavity within the mold that has been clamped, and hardens to form a molded product.

When producing products in large quantities, a marking device is used because of the necessity to marking manufacturing numbers or manufacturing dates on the surface of the products. Manufacturing numbers and manufacturing dates are marked by inserting a marking device comprising a marking indication portion into the cavity side of a molding mold and performing mold forming in that inserted state, whereby the marking content is directly marked and molded onto the surface of a molded product.

For injection molding machines, a marking device has been proposed which avoids requiring the operator to work in an unnatural posture, prevents burning caused by contact between a part of the operator's body and the mold base plate, allows changing of the indications of an indicator body, is superior in heat resistance and durability, has a simple structure, and is at low-cost (e.g., see Patent Document 1). The marking device described in Patent Document 1 comprises an outer shell body with characters or symbols marked circumferentially on an upper end surface of a hollow cylindrical body, an upper driving/driven mechanism disposed in an upper portion of a hollow portion of the outer shell body, and a lower driving mechanism disposed in a lower portion of the hollow portion of the outer shell body.

In the marking device of Patent Document 1, a configuration is disclosed in which a connecting rod is driven by means of pneumatic pressure generated in the lower driving mechanism, and an indication portion is rotated by the engagement between sawtooth portions provided in the upper driving/driven mechanism, as well as the engagement between the sawtooth portion and a projecting portion provided on a rotor. This marking device consists of an outer shell body with characters or symbols marked circumferentially on an upper end surface of a hollow cylindrical body, an upper driving/driven mechanism disposed in an upper portion of a hollow portion of the outer shell body, and a lower driving mechanism disposed in a lower portion of the hollow portion of the outer shell body; wherein the upper driving/driven mechanism is composed of an outer cylinder fixed inside of the outer shell body and provided with an engaging portion at its upper end, an inner cylinder loosely fitted inside the outer cylinder and having an engaging portion formed at its upper end, a rotor composed of a solid or hollow cylindrical body loosely fitted inside the outer shell body, and a biasing means that biases the rotor downward; wherein the inner cylinder is connected to a piston via a connecting rod; wherein the rotor and the outer cylinder engage in a first state and disengage in a second state, while the rotor and the inner cylinder disengage in the first state and engage in the second state; wherein the lower driving mechanism consists of a cylinder into which compressed air is introduced through an air passage connected to a compressed air source, and the piston loosely fitted inside the cylinder and driven by the compressed air; and wherein the cylinder is fitted into the outer shell body.

This marking device utilizes engagement and disengagement between the rotor and a sawtooth portion of the outer cylinder, as well as engagement and disengagement between the rotor and a sawtooth portion of the inner cylinder having a different phase from that of the outer cylinder to move a projecting portion of the rotor by one tooth, thereby rotating an indicator body by one pitch. A vertical slit is provided on an inner surface of the outer cylinder. On the other hand, a rib is provided on an outer surface of the inner cylinder.

However, in the marking device of Patent Document 1, the projecting portion provided on a lower portion of the rotor fits with saw teeth of a second sawtooth portion of the inner cylinder to rotate the rotor. In the case of restoring the position, the projecting portion fits with the outer cylinder. Thus, only vertical movement of the inner cylinder may not restore the sawtooth portion of the inner cylinder to the correct position. This causes a problem in that the indicator body cannot be precisely rotated by one pitch.

### PRIOR ART

### Patent Literature

Japanese Patent Publication No. 7239195

### BRIEF SUMMARY OF THE INVENTION

### Problems to be Solved by the Invention

The inventors of the present invention have conducted extensive studies to solve the above problem and provide a marking device having a simple structure, capable of reliably restoring the position and precisely rotating an indicator body by one pitch.

### Means for Solving the Problems

The marking device according to a first aspect of the present invention is
a marking device to be fitted into a recess of a molding mold,
the marking device comprising:
   a hollow cylindrical body comprising a first hole at a center of a lower face thereof;
   a driving portion comprising a first base provided with a first sawtooth portion at a periphery of the first hole in the hollow cylindrical body, a second base provided with a second sawtooth portion fitted into an interior of the first base, and a first connecting rod fixing the second base and extending through the first hole to a lower portion of the marking device;
   a first driving-driven portion comprising a third base, the third base being provided with a third sawtooth portion that engages with the first sawtooth portion and the second sawtooth portion, and a fourth sawtooth portion on a face opposite to the face on which the third sawtooth portion is provided; and
   a second driving-driven portion comprising a fourth base provided with a fifth sawtooth portion that engages with the fourth sawtooth portion, and a second connecting rod connected to the fourth base and provided with a cylindrically enlarged head portion, wherein an indicator body is provided at an upper side of the head portion.

The marking device according to a second aspect of the present invention is characterized in that the second driving-driven portion further comprises a cover portion provided at an upper portion of the hollow cylindrical body and comprising a cylindrically projecting cylindrical portion at a central portion thereof, and a fifth base at a lower side of the cover portion, fifth base being fixed to the hollow cylindrical body, and provided with a sixth sawtooth portion on an upper face thereof;
the second connecting rod penetrates through the cover portion and the fifth base; and
the second connecting rod is provided, at a lower side of the head portion, with a seventh sawtooth portion that engages with the sixth sawtooth portion.

The marking device according to a third aspect of the present invention is characterized in that the first sawtooth portion and the second sawtooth portion have saw teeth with a same pitch; in a state that the second base is inserted into the first base, the saw teeth of the first sawtooth portion and the saw teeth of the second sawtooth portion are arranged with a pitch offset; and the third sawtooth portion engages with the first sawtooth portion.

The marking device according to a fourth aspect of the present invention is characterized in that the pitch offset between the saw teeth of the first sawtooth portion and the saw teeth of the second sawtooth portion is from 0.1 to 0.9 pitch.

The marking device according to a fifth aspect of the present invention is characterized in that the third sawtooth portion has single-layered teeth or double-layered teeth.

The marking device according to a sixth aspect of the present invention is characterized in that a first biasing means is provided between the third base and the fifth base, and a second biasing means is provided between the fourth base and the fifth base.

The marking device according to a seventh aspect of the present invention is characterized in that the indicator body is attached on the upper side of the head portion with a connecting means.

### Effects of the Invention

In the marking device of the first aspect of the present invention, the saw teeth that engage with the first sawtooth portion are the saw teeth provided on the outer side among the double-layered teeth composing the third sawtooth portion. Thus, when the first connecting rod rises, the second sawtooth portion engages with the saw teeth provided on the inner side among the double-layered teeth composing the third sawtooth portion. Thus, the movement of the first driving portion can be reliably transmitted to the first driving-driven portion and the second driving-driven portion, thereby enabling the indicator body to be reliably rotated by one graduation with a single operation. When the series of operations is completed, the second base descends to the lowermost side within the hollow cylinder. Here, the third base also descends within the hollow cylinder, and the saw teeth of the first sawtooth portion engage with the saw teeth provided on the outer side among the double-layered teeth composing the third sawtooth portion. Since the second base is not rotatable within the hollow cylinder, the first sawtooth portion and the second sawtooth portion can be restored to the positional relationship prior to the start of the operation at the bottom of the hollow cylinder. The double-layered teeth composing the third sawtooth portion are fixed within the third base. Thus, the saw teeth of the first sawtooth portion engage with the saw teeth provided on the outer side among the double-layered teeth composing the third sawtooth portion, whereby the first sawtooth portion, the second sawtooth portion, and the third sawtooth portion can be restored to the correct positions. As a result, a marking device having a simple structure, capable of reliably restoring the position and precisely rotating an indicator body by one pitch, can be obtained.

**In** the marking device of the second aspect of the present invention, the second connecting rod penetrates through the cover portion and the fifth base. A cylindrically enlarged head portion provided on the second connecting rod is movable within the cylindrical portion in the vertical direction and rotatable within the cylindrical portion. Since the second connecting rod is guarded inside the cylindrical portion, the movement and rotation of the second connecting rod can be reliably performed. Further, a seventh sawtooth portion that engages with the sixth sawtooth portion is provided at the lower side of the head portion, and an indicator body is provided at the upper side of the head portion, whereby the indicator body can be reliably rotated by one pitch with a single operation.

**In** the marking device of the third aspect of the present invention, in a state where no force is applied from below to the first connecting rod, the first sawtooth portion and the second sawtooth portion comprise saw teeth having a same pitch. Before the operation is started, the saw teeth of the first sawtooth portion and the saw teeth of the second sawtooth portion compose double-layered teeth in a state where their pitches are offset. The third sawtooth portion is engaged with the first sawtooth portion in a state where no force is applied from below to the first connecting rod. Thus, when a single operation is completed, the first sawtooth portion and the third sawtooth portion can be restored to the fully engaged position. As a result, the operation can be performed reliably.

In the marking device of the fourth aspect of the present invention, if the pitch offset between the saw teeth of the first sawtooth portion and the saw teeth of the second sawtooth portion is from 0.1 to 0.9 pitch, the first sawtooth portion and the third sawtooth portion can be restored to the fully engaged position.

In the marking device of the fifth aspect of the present invention, the third sawtooth portion may have single-layered teeth or double-layered teeth. If it has single-layered teeth, the structure is simple, and it can be manufactured at low cost. If it has double-layered teeth, the first sawtooth portion and the third sawtooth portion can be engaged more reliably, thereby enabling reliable restoration of the position.

In the marking device of the sixth aspect of the present invention, a first biasing means is provided between the third base and the fifth base, and a second biasing means is provided between the fourth base and the fifth base. Thus, when the sixth sawtooth portion and the seventh sawtooth portion are engaged, the third base moves downward, the fourth base moves upward, and the marking device can be restored to the state prior to the start of the operation.

In the marking device of the seventh aspect of the present invention, the indicator body is attached on the upper side of the head portion with a connecting means. The indicator body is attached to the head portion of the second connecting rod with a connecting means, thereby allowing the indicator body to be replaced depending on the intended use.

### BRIEF DESCRIPTION OF DRAWINGS

FIG. 1 is a cross-sectional view showing a state in which the marking device of the present invention is attached to a mold base plate.
FIG. 2 is a perspective view of the marking device of the present invention.
FIG. 3 is a cross-sectional view of the marking device of FIG. 2 in the A-A' direction.
FIG. 4 is an exploded perspective view of the marking device of FIG. 2.
FIG. 5 is a schematic drawing illustrating an action of the marking device of the present invention.
FIG. 6 is a schematic drawing illustrating another action of the marking device of the present invention.
FIG. 7 is a schematic drawing illustrating another action of the marking device of the present invention.
FIG. 8 is a schematic drawing illustrating another action of the marking device of the present invention.
FIG. 9 is a schematic drawing illustrating another action of the marking device of the present invention.
FIG. 10 is a schematic drawing illustrating another action of the marking device of the present invention.

### DETAILED DESCRIPTION OF THE INVENTION

### Description of Embodiments

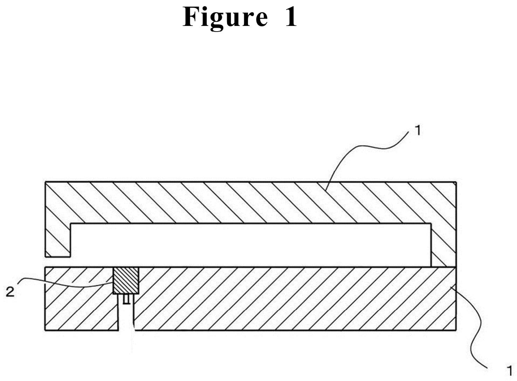

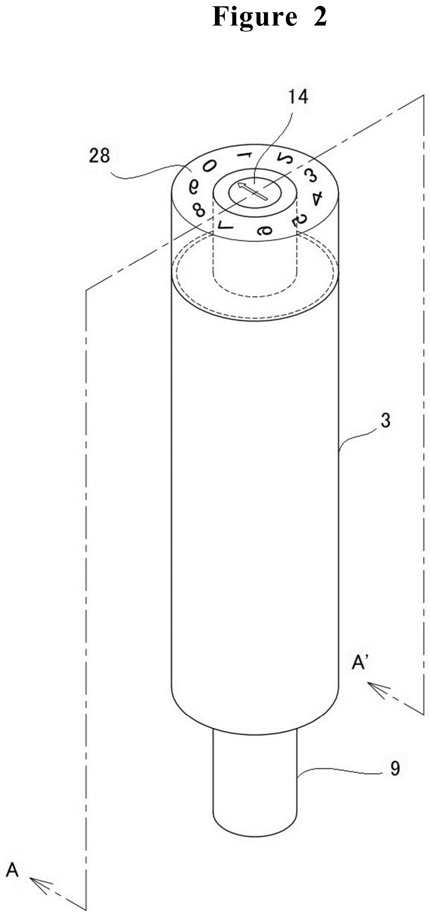

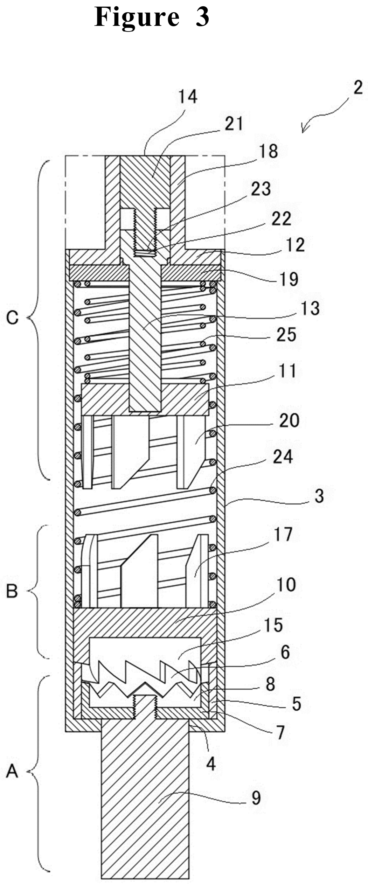

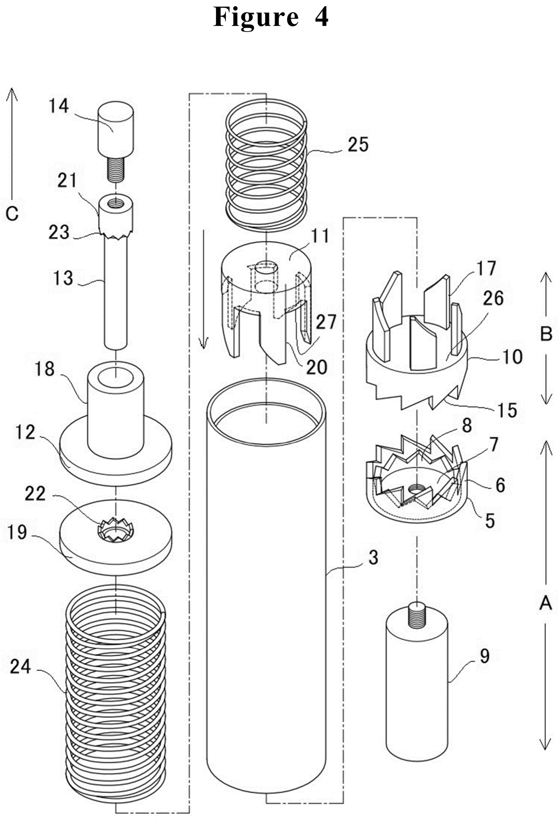

Embodiments of the marking device of the present invention are explained below with reference to the drawings. FIG. 1 is a cross-sectional view showing a state in which the marking device of the present invention is attached to a mold base plate. FIG. 2 is a perspective view of the marking device of the present invention, and FIG. 3 is a cross-sectional view of the marking device of FIG. 2 in the A-A' direction. FIG. 4 is an exploded perspective view of the marking device of FIG. 2.

A marking device 2 of the present invention is used while being attached to a mold base plate. As shown in FIG. 1, for example, the marking device 2 of the present invention is tightly fitted into a recess of the mold base plate 1 so that an upper face of the marking device 2 flushes with the top surface of the cavity. An indication plate 28 bearing numbers, characters, or the like is attached around the upper face of the marking device 2 in FIG. 2. In FIG. 1, a mechanism connected to a lower portion of a first connecting rod (9) extending from a bottom face of the marking device 2 is not shown. Driving of the marking device 2 is performed by moving the first connecting rod (9) in the vertical direction. The driving means for causing the vertical movement is not particularly limited, and a known driving means can be used; the vertical movement may be caused by high-pressure air from a compressed air source or the like, or by an electric motor or the like.

### [First Embodiment]

### [Configuration]

As shown in FIGs. 3 and 4, the marking device 2 of the present invention comprises a driving portion A, a first driving-driven portion B, and a second driving-driven portion C, in a hollow cylindrical body 3 that has a first hole 4 at the center of the lower face thereof.

### (Driving portion)

In the present invention, the driving portion A comprises a first base 5 provided with a first sawtooth portion 6 on a periphery of the first hole 4 in the hollow cylindrical body 3, a second base 7 provided with a second sawtooth portion 8 and fitted into the inside of the first base 5, and a first connecting rod 9 that fixes the second base 7 and extends toward the lower portion of the marking device 2 through the first hole 4.

The driving portion A functions to drive upward movement and axial rotation of the first driving-driven portion B by means of a force in the upper direction of the device applied externally to the first connecting rod 9.

The first base 5 is in cylindrical shape and fixed to the periphery of the first hole 4 in the hollow cylindrical body 3. The outer side surface of the first base 5 is in contact with the inner surface of the hollow cylindrical body 3, and the bottom face of the first base 5 is in contact with the upper face of the bottom side of the hollow cylindrical body 3 and fixed thereto. The first sawtooth portion 6 is provided at the upper portion of the first base 5.

The second base 7 is fixed to the first connecting rod 9 and moves in the vertical direction in accordance with the movement of the first connecting rod 9 in the vertical direction. The first connecting rod 9 is allowed to move only in the vertical direction. The second sawtooth portion 8 has saw teeth arranged with the same pitch as the first sawtooth portion 6. In a state where the second base 7 is fully inserted into the first base 5, the first saw teeth and the second saw teeth are arranged with a pitch offset. The pitch offset is selected as appropriate and is preferably in a range of 0.1 to 0.9 pitch. The structure of the saw teeth is not particularly limited and may be either a single-flank structure or a double-flank structure. In the example of FIG. 3, the saw teeth of the first sawtooth portion 6 have a single-flank structure, and the saw teeth of the second sawtooth portion 8 have a double-flank structure.

The first connecting rod 9 is provided so as to be coaxial with the hollow cylindrical body 3.

### (First driving-driven portion)

The first driving-driven portion B is driven to move forward by the driving portion A. A third sawtooth portion 15 provided at the lower portion of the third base 10 of the first driving-driven portion B rotates coaxially by the rotation caused by the driving of the driving portion A. The first driving-driven portion B transmits upward movement and rotation of the first driving-driven portion B to the second driving-driven portion C and drives the second driving-driven portion C.

The first driving-driven portion B comprises the third base 10. The third base 10 has a disk-like shape that is coaxial with the hollow cylindrical body 3. The first driving-driven portion B can move up and down and rotate within the hollow cylindrical body 3 while remaining coaxial with the hollow cylindrical body 3. The third base 10 is not connected to the connecting rod.

The third base 10 is provided, at the side of the second base 7, with the third sawtooth portion 15 that engages with the first sawtooth portion 6 and the second sawtooth portion 8. The third sawtooth portion 15 is composed of double-layered teeth having saw teeth engaging with the saw teeth of the first sawtooth portion 6 and the saw teeth engaging with the saw teeth of the second sawtooth portion 8. Among the saw teeth of the third sawtooth portion 15, the saw teeth engaging with the saw teeth of the first sawtooth portion 6 and the saw teeth engaging with the saw teeth of the second sawtooth portion 8 are arranged in a way that the third sawtooth portion 15 does not simultaneously fit with the first sawtooth portion 6 and the second sawtooth portion 8. With the third sawtooth portion 15 being double-layered teeth having such a shape, the third sawtooth portion 15 can reliably engage with the saw teeth of the first sawtooth portion 6 and the saw teeth of the second sawtooth portion 8. The third sawtooth portion 15 may also be single-layered teeth.

A fourth sawtooth portion 17 is provided on a face of the third base 10 which is opposite to a face on which the third sawtooth portion 15 is provided.

### (Second driving-driven portion)

The second driving-driven portion C is driven to move upward by the driving of the first driving-driven portion B and is rotated coaxially by the rotation caused by the driving of the first driving-driven portion B, thereby rotating an indicator body 14.

The second driving-driven portion C comprises a fourth base 11, a fifth base 19, a cover portion 12, and a second connecting rod 13. The second connecting rod 13 is integrated with the fourth base 11. The fifth base 19 and the cover portion 12 are each provided with a hole at their centers through which the second connecting rod 13 penetrates, but they do not move because they are fixed to the hollow cylindrical body 3.

The fourth base 11 is provided, at the side facing the third base 10, with a fifth sawtooth portion 20 that engages with the fourth sawtooth portion 17. On the opposite side of the fourth base 11, the fifth base 19 is provided. A sixth sawtooth portion 22 is provided at a side of the fifth base 19 which is opposite to the fourth base 11. In a state where no force is applied from below to the first connecting rod 9, the saw teeth of the fourth sawtooth portion 17 and the saw teeth of the fifth sawtooth portion 20 are arranged at positions where their opposing faces do not fit.

The cover portion 12 is provided so as to cover the entire upper portion of the hollow cylindrical body 3. At the central portion of the cover portion 12, a cylindrically projecting cylindrical portion 18 is provided. The cover portion 12 supports the vertical movement of the second connecting rod 13 within the cylindrical portion 18. The sixth sawtooth portion 22 is also present in the cylindrical portion 18.

The second connecting rod 13 fixes the fourth base 11 coaxially with the hollow cylindrical body 3. The second connecting rod 13 is provided, within the cylindrical portion 18, with a cylindrically enlarged head portion 21. At the lower side of the head portion 21, a seventh sawtooth portion 23 is provided that engages with the sixth sawtooth portion 22. The second connecting rod 13 moves in the vertical direction. Further, the second connecting rod 13 and the fourth base 11 are rotatable coaxially. The cylindrically enlarged head portion 21 of the second connecting rod 13 can move in the vertical direction within the cylindrical portion 18 of the cover portion 12.

The indicator body 14 is provided at the front end of the head portion 21. The indicator body 14 indicates specific characters or numerals on a dial on which characters and numerals are written. Specifically, it bears an arrow or the like. The indicator body 14 may be integrated with the head portion 21 of the second connecting rod 13 as shown in FIG. 3, or may be attached to the upper side of the head portion via a connecting means as shown in FIG. 4. The connecting means can be known connecting means such as screws.

In the marking device 2 of the present invention, a first biasing means 24 is provided between the upper side of the third base 10 and the lower side of the fifth base 19, and a second biasing means 25 is provided between the upper side of the fourth base 11 and the lower side of the fifth base 19. The biasing means may be any known means such as springs.

### [Operation]

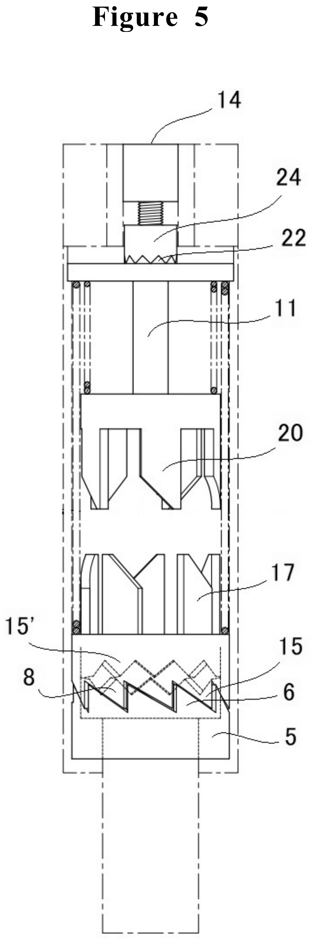

The operation of the marking device of the present invention will be explained below with reference to FIGs. 5 to 10. In the following series of operations, the explanation is based on an example in which the third sawtooth portion is composed of double-layered teeth; however, even if it is composed of single-layered teeth, the basic operation remains unchanged.

### (Step 1)

FIG. 5 is a schematic drawing illustrating a state of the marking device of the present invention before use (Step 1). In FIG. 5, the saw teeth of the first sawtooth portion 6 are engaged with the saw teeth of the third sawtooth portion 15. The saw teeth of the second sawtooth portion 8 are not engaged with the saw teeth of the third sawtooth portion 15'. The saw teeth of the second sawtooth portion 8 and the saw teeth of the third sawtooth portion 15' are arranged without engaging each other, with each pitch offset from the saw teeth of the first sawtooth portion 6. The fourth sawtooth portion 17 and the fifth sawtooth portion 20 are arranged with a pitch offset from each other. Each of these pitch offsets is selected as appropriate and is preferably within a range of 0.1 to 0.9 pitch. The sixth sawtooth portion 22 and the seventh sawtooth portion 23 are engaged with each other.

### (Step 2)

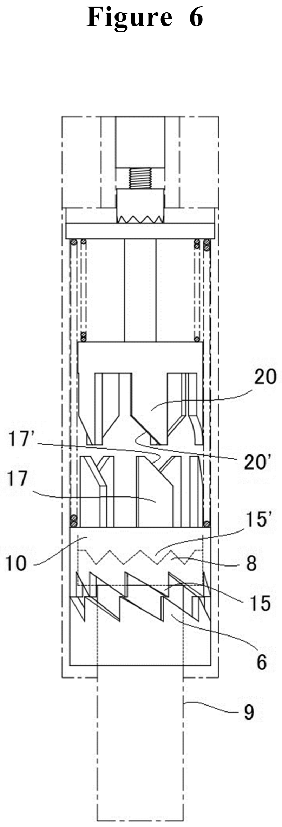

FIG. 6 is a schematic drawing illustrating a state in which the driving portion A starts driving and a force starts to be applied to move the first connecting rod 9 upward. In FIG. 6, the engagement between the saw teeth of the first sawtooth portion 6 and the saw teeth of the third sawtooth portion 15 is released due to the upward movement of the driving portion A. With upward movement of the driving portion A, the saw teeth of the second sawtooth portion 8 come into contact with the saw teeth of the third sawtooth portion 15'. When the driving portion A is moved further upward, the saw teeth of the second sawtooth portion 8 and the saw teeth of the third sawtooth portion 15' engage. This engagement causes the first driving-driven portion B to rotate. This rotation also causes the third base 10 and the fourth sawtooth portion 17 to rotate. By this rotation, as shown in FIG. 6, the fourth sawtooth portion 17 moves to a position where inclined portions 17' of the fourth sawtooth portion 17 and inclined portions 20' of the fifth sawtooth portion 20 face each other.

**In** the case that the third sawtooth portion 15 has single-layered teeth, when no force is applied to the first connecting rod 9 from below, the saw teeth of the third sawtooth portion 15 is in engagement with the saw teeth of the first sawtooth portion 6. Force begins to be applied to the first connecting rod 9 from below, and the first sawtooth portion 6 and the second sawtooth portion 8 come into contact with the third sawtooth portion 15. When force is further applied to the first connecting rod 9 from below and the first connecting rod 9 moves upward, the third sawtooth portion 15 rotates and engages with the second sawtooth portion 8. This engagement causes the first driving-driven portion B to rotate. The subsequent movement of the first driving-driven portion B is the same as in the case that the third sawtooth portion 15 has double-layered teeth.

### (Step 3)

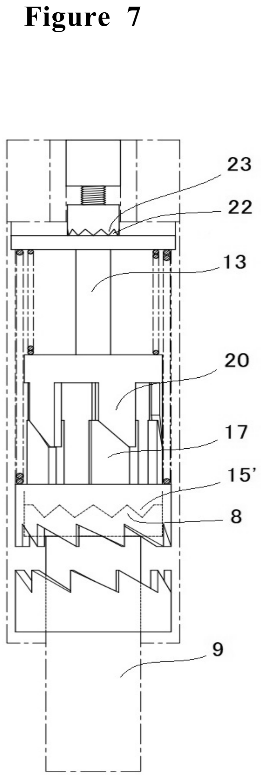

Fig. 7 is a schematic drawing illustrating a state in which a force is applied to further move the driving portion A upward. As shown in Fig. 7, when the second connecting rod 13 further moves upward, the inclined portions of the saw teeth of the fourth sawtooth portion 17 come into contact with the inclined portions of the saw teeth of the fifth sawtooth portion 20. Here, the second connecting rod 13 starts to rise, and the saw teeth of the sixth sawtooth portion 22 and the saw teeth of the seventh sawtooth portion are in contact at their tip points.

### (Step 4)

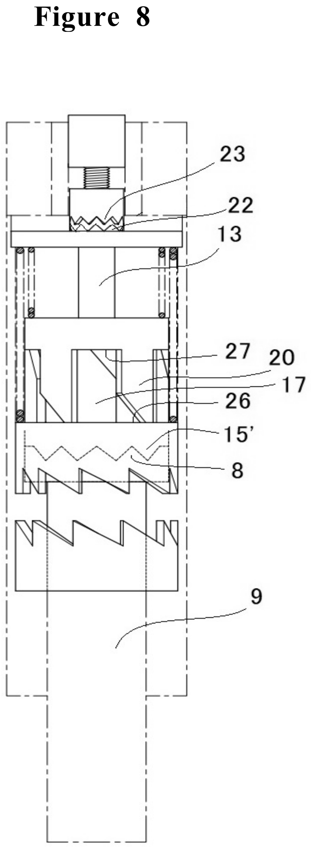

In the state shown in Fig. 7, when the first connecting rod 9 of the driving portion A is further moved upward, both the first driving-driven portion B and the second driving-driven portion C subsequently rise. Here, the inclined portions of the saw teeth of the fourth sawtooth portion 17 and the inclined portions of the saw teeth of the fifth sawtooth portion 20 rise while being in contact. When the first driving-driven portion part B is further raised, the saw teeth of the fifth sawtooth portion 20 slide down the inclined portions of the saw teeth of the fourth sawtooth portion 17, as shown in FIG. 8. The fourth sawtooth portion 17 and the fifth sawtooth portion 20 comprise groove portions 26 and 27, respectively, between the saw teeth. The saw teeth of the fourth sawtooth portion 17 and the saw teeth of the fifth sawtooth portion 20 mesh within the groove portions 26 and 27. The number of saw teeth of the fourth sawtooth portion 17 and the number of saw teeth of the fifth sawtooth portion 20 are each half the number of saw teeth of the third sawtooth portion. On the other hand, the groove portions 26 and 27 provided between the saw teeth of the fourth sawtooth portion 17 and the saw teeth of the fifth sawtooth portion 20 are present on the surfaces of the third base 10 and the fifth base 11, in the same number as that of saw teeth of the fourth sawtooth portion 17 and that of saw teeth of the fifth sawtooth portion 20, at equal intervals. Thus, the meshing action with the groove portions 26 and 27 causes the second connecting rod 13 to rotate by an amount corresponding to half the number of saw teeth of the fifth sawtooth portion 20 (in other words, an amount corresponding to the number of saw teeth of the third sawtooth portion). These actions cause the second connecting rod 13 to rotate by one pitch.

Through the operations of Step 3 and Step 4 described above, the seventh sawtooth portion 23 rotates by one pitch. This rotation makes it possible to rotate the indicator body 14 by one pitch. In order to rotate the indicator body 14 by one pitch in this manner, the numbers of saw teeth of the first sawtooth portion 6, the second sawtooth portion 8, the third sawtooth portion 15, the sixth sawtooth portion 22, and the seventh sawtooth portion 23 may be twice the number of saw teeth of the fourth sawtooth portion 17 and the fifth sawtooth portion 20. For example, as shown in FIG. 2, when the dial bears numbers 0 to 9, a rotation of 36° in one operation is sufficient, and therefore the numbers of saw teeth of the first sawtooth portion 6, the second sawtooth portion 8, the third sawtooth portion 15, the sixth sawtooth portion 22, and the seventh sawtooth portion 23 may be 10, while the numbers of teeth of the fourth sawtooth portion 17 and the fifth sawtooth portion 20 may be 5.

### (Step 5)

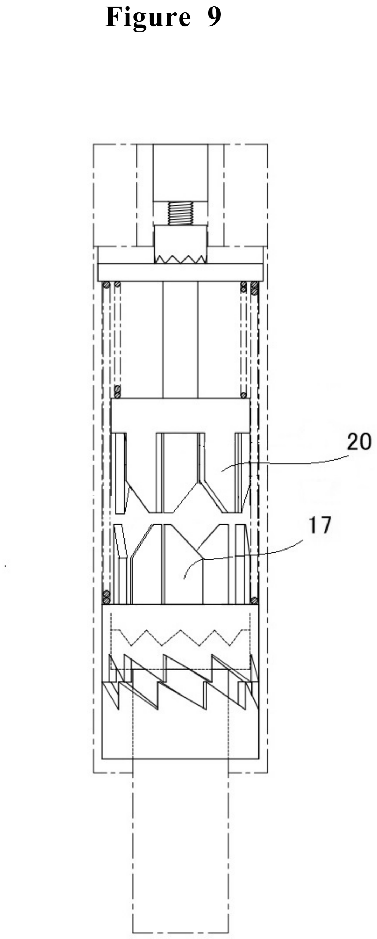

FIG. 9 is a schematic drawing illustrating a state in which the force for moving the driving portion A upward has been released. When the force for moving the first connecting rod 9 upward is released, the driving portion A moves downward. Since the force for moving the first driving-driven portion B upward is also released, it moves downward. Thereby, the engagement between the fourth sawtooth portion 17 and the fifth sawtooth portion 20 is released.

### (Step 6)

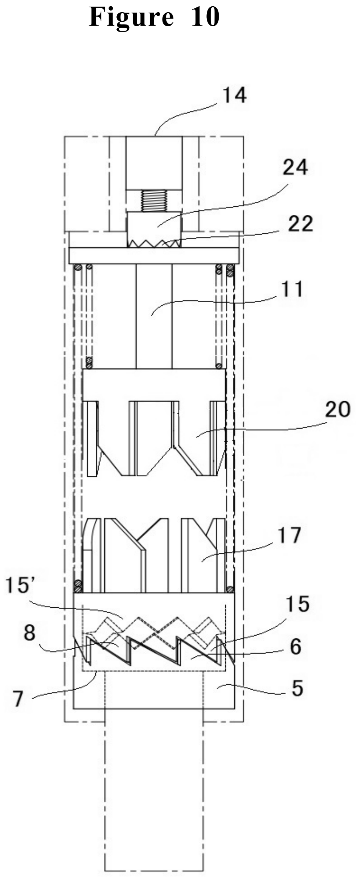

FIG. 10 is a schematic drawing illustrating a state at the completion of the operation. The first connecting rod 9 and the second base 7 are fully descended. The second base 7 is inserted inside the first base 5. The saw teeth of the third sawtooth portion 15 engage with the saw teeth of the first sawtooth portion 6. Thereby, the first driving-driven portion B is reliably rotated and restored to the position, and the operation is completed.

To bring the indicator body 14 to a desired position, Steps 1 to 6 above are repeated.

In the present specification, the offset of saw teeth between sawtooth portions having the same pitch may be in the range of 0.1 to 0.9 pitch. The pitch offset may be appropriately selected within this range.

In the marking device of the present invention, a first biasing means 24 and a second biasing means 25 are provided. The first biasing means 24 is provided between the third base 10 and the fifth base 19. The second biasing means 25 is provided between the fourth base 11 and the fifth base 19. During the operations shown in FIG. 6 to FIG. 8 above, the first biasing means 24 is in an extended state, and the second biasing means 25 is in a compressed state. When the upward force applied to the first connecting rod is released, the first biasing means 24 and the second biasing means 25 are restored to the position in their original states, thereby rapidly separating the fifth sawtooth portion 20 and the fourth sawtooth portion 17.

### [Second Embodiment]

In a second embodiment, the driving portion and the first driving-driven portion are the same as those in the first embodiment, but the second driving-driven portion is different. Only the differences will be described below.

A second driving-driven portion C of the second embodiment comprises a fourth base 11 provided with a fifth sawtooth portion 20 that engages with a fourth sawtooth portion 17, and a second connecting rod 13 connected to a base 11 and provided with a cylindrically enlarged head portion 21; an indicator body 14 is provided at the upper side of the head portion 21.

The second embodiment is a simplified version of the first embodiment. In this embodiment, the fifth base 19, the cover portion 12, the sixth sawtooth portion 22, and the seventh sawtooth portion 23 are absent. The indicator body 14 is provided at the front end of the head portion 21 of the second connecting rod 13.

As shown in FIG. 4, the fourth sawtooth portion 17 and the fifth sawtooth portion 20 are provided with groove portions 26 and 27, respectively, between the saw teeth. This enables the indicator body 14 to be rotated by one pitch.

### (Step 1) and (Step 2) are as described above.

### (Step 3')

In accordance with the further upward movement of the first connecting rod 9, the driving portion A also moves upward. Since the saw teeth of the second sawtooth portion 8 and the saw teeth of the third sawtooth portion 15 are engaged, the first driving-driven portion B also moves upward. When the first driving-driven portion B is further moved upward, the inclined portions of the saw teeth of the fourth sawtooth portion 17 comes into contact with the inclined portions of the saw teeth of the fifth sawtooth portion 20. Thereby, the second connecting rod 13 moves upward.

### (Step 4')

When the first connecting rod 9 of the driving portion A is further moved upward, both the first driving-driven portion B and the second driving-driven portion C continue to rise. Here, the inclined portions of the saw teeth of the fourth sawtooth portion 17 and the inclined portions of the saw teeth of the fifth sawtooth portion 20 rise while being in contact. When the first driving-driven portion B is further raised, the saw teeth of the fifth sawtooth portion 20 slide down the inclined portions of the saw teeth of the fourth sawtooth portion 17, and the saw teeth of the fourth sawtooth portion 17 and the saw teeth of the fifth sawtooth portion 20 fall into the groove portions of each other and mesh. These actions cause the second connecting rod 13 to rotate by one pitch. Thereby, the indicator body also rotates by one pitch.

### (Step 5')

When the force for moving the first connecting rod 9 upward is released, the driving portion A moves downward. The first driving-driven portion B moves downward as well since the force for moving it upward is also released. Thereby, the engagement between the fourth sawtooth portion 17 and the fifth sawtooth portion 20 is released.

### (Step 6')

The first connecting rod 9 and the second base 7 are fully descended. The second base 7 is inserted inside the first base 5. The saw teeth of the third sawtooth portion engage with the saw teeth of the first sawtooth portion. Thereby, the driving portion A is reliably restored to the position, and the operation is completed.

### INDUSTRIAL APPLICABILITY

The present invention relates to a marking device for marking a manufacturing number or a manufacturing date on the surface of a molded product in an injection molding machine, and can reliably change the indications of the indicator body.

### EXPLANATIONS OF REFERENCES

- 1: mold base plate
- 2: marking device
- 3: hollow cylindrical body
- 4: first hole
- 5: first base
- 6: first sawtooth portion
- 7: second base
- 8: second sawtooth portion
- 9: first connecting rod
- 10: third base
- 11: fourth base
- 12: cover portion
- 13: second connecting rod
- 14: indicator body
- 15: third sawtooth portion
- 17: fourth sawtooth portion
- 18: cylindrical portion
- 19: fifth base
- 20: fifth sawtooth portion
- 21: head portion
- 22: sixth sawtooth portion
- 23: seventh sawtooth portion
- 24: first biasing means
- 25: second biasing means
- 26, 27: groove portion
- 28: indication plate
- A: driving portion
- B: first driving-driven portion
- C: second driving-driven portion

## Claims

1. A marking device to be fitted into a recess of a molding mold, the marking device comprising:
a hollow cylindrical body comprising a first hole at a center of a lower face thereof;
a driving portion comprising a first base provided with a first sawtooth portion at a periphery of the first hole in the hollow cylindrical body, a second base provided with a second sawtooth portion fitted into an interior of the first base, and a first connecting rod fixing the second base and extending through the first hole to a lower portion of the marking device;
a first driving-driven portion comprising a third base, the third base being provided with a third sawtooth portion that engages with the first sawtooth portion and the second sawtooth portion, and a fourth sawtooth portion on a face opposite to a face on which the third sawtooth portion is provided; and
a second driving-driven portion comprising a fourth base provided with a fifth sawtooth portion that engages with the fourth sawtooth portion, and a second connecting rod connected to the fourth base and provided with a cylindrically enlarged head portion, wherein an indicator body is provided at an upper side of the head portion.

2. The marking device according to Claim 1, wherein the second driving-driven portion further comprises a cover portion provided at an upper portion of the hollow cylindrical body and comprising a cylindrically projecting cylindrical portion at a central portion thereof; and a fifth base at a lower side of the cover portion, the fifth base being fixed to the hollow cylindrical body, and provided with a sixth sawtooth portion on an upper face thereof,
wherein the second connecting rod penetrates through the cover portion and the fifth base; and
wherein the second connecting rod is provided, at a lower side of the head portion, with a seventh sawtooth portion that engages with the sixth sawtooth portion.

3. The marking device according to Claim 1, wherein the first sawtooth portion and the second sawtooth portion have saw teeth with a same pitch, wherein, in a state that the second base is inserted into the first base, the saw teeth of the first sawtooth portion and the saw teeth of the second sawtooth portion are arranged with a pitch offset, and wherein the third sawtooth portion engages with the first sawtooth portion.

4. The marking device according to Claim 3, wherein the pitch offset between the saw teeth of the first sawtooth portion and the saw teeth of second sawtooth portion is from 0.1 to 0.9 pitch.

5. The marking device according to Claim 1, wherein the third sawtooth portion has single-layered teeth or double-layered teeth.

6. The marking device according to Claim 1, wherein a first biasing means is provided between the third base and the fifth base, and a second biasing means is provided between the fourth base and the fifth base.

7. The marking device according to Claim 1, wherein the indicator body is attached on the upper side of the head portion with a connecting means.
